**Europäisches Patentamt**

**European Patent Office**

**Office européen des brevets**

(19)

(11) Veröffentlichungsnummer: **0 200 120**
**B1**

(12) # EUROPÄISCHE PATENTSCHRIFT

(45) Veröffentlichungstag der Patentschrift:
25.10.89

(51) Int. Cl.⁴: **B 65 G 59/02**

(21) Anmeldenummer: **86105406.2**

(22) Anmeldetag: **18.04.86**

(54) **Platteneinschiebevorrichtung zum Einschieben von auf einem Hubtisch abgelegten plattenförmigen Werkstücken in Plattenaufteilanlagen.**

(30) Priorität: **02.05.85 DE 3515729**

(43) Veröffentlichungstag der Anmeldung:
**05.11.86 Patentblatt 86/45**

(45) Bekanntmachung des Hinweises auf die Patenterteilung:
**25.10.89 Patentblatt 89/43**

(84) Benannte Vertragsstaaten:
**AT DE FR GB IT**

(56) Entgegenhaltungen:
**DD-A-210 664**

(73) Patentinhaber: **Jenkner, Erwin, Lindenstrasse 13, D-7261 Gechingen- Bergwald (DE)**

(72) Erfinder: **Jenkner, Erwin, Lindenstrasse 13, D-7261 Gechingen (DE)**
Erfinder: **Hartmann, Gerhard, Reuteweg 17, D-7273 Ebhausen- Rotfelden (DE)**

(74) Vertreter: **Becker, Maria, Dipl.- Phys., Auf dem Haigst 29, D-7000 Stuttgart 70 (DE)**

## Beschreibung

Die Erfindung betrifft eine auf einem horizontal verfahrbaren Einschubwagen angeordnete Platteneinschiebevorrichtung mit den Merkmalen des Oberbegriffes von Anspruch 1.

Eine Platteneinschiebevorrichtung dieser Art ist, was druckschriftlich allerdings nicht belegt werden kann, bereits bekannt.

Da einzeln oder als Paket vom Hubtisch abzuschiebende plattenförmige Werkstücke häufig nicht eben, sondern sowohl in Einschubrichtung als auch quer zu dieser wellig und verzogen sind, ist es notwendig, während der Einschubbewegung des Einschubwagens das Schiebeglied in vertikaler Richtung schwimmend an diesem zu halten. Es wird dann von dem auf der einzuschiebenden Werkstückplatte bzw. auf der oberen Werkstückplatte eines einzuschiebenden Plattenstapels aufruhenden Abstützarm in vertikaler Richtung nach oben oder unten mitgenommen, sofern beim Einschiebevorgang sich der Punkt, an den der Abstützarm auf einer Werkstückplatte aufruht, aufgrund vorstehend erläuterter Unebenheiten in der Höhe entsprechend verlagert wird.

Dadurch ist sichergestellt, dass die dem auf dem Hubtisch aufruhenden Plattenstapel zugekehrte Kante des unteren Stirnendes des Schiebegliedes beim überfahren der oberen Werkstückplatte des auf dem Hubtisch aufruhenden Plattenstapels nicht mit dessen oberer Fläche in Berührung kommen und diese beschädigen kann.

Die Einstellung des Schiebegliedes zum Abschieben einer Werkstückplatte oder einer gewünschten Anzahl solcher Platten von einem Plattenstapel ist bei dieser bekannten Konstruktion mittels des Abstützarmes vorzunehmen, der hierzu vom Schiebeglied zu lösen und, bezogen auf dessen unteres Stirnende, manuell um eine entsprechende Strecke zu verschieben und danach am Schiebeglied wieder festzulegen ist.

Da am Einschubwagen in der Regel in seitlichem Abstand voneinander mehrere Platteneinschiebevorrichtungen montiert sind, ist diese Einstellung des Schiebegliedes entsprechend oft vorzunehmen, was deshalb besonders umständlich und zeitraubend ist, weil üblicherweise von einem Abschubtakt zum anderen die Anzahl der abzuschiebenden Werkstückplatten gewechselt werden muss. Demgemäss sind die die Leistung der Platteneinschiebevorrichtung entsprechend mindernden Umrüst- und damit die Ausfallzeiten dieser bekannten Vorrichtung gross.

Der Erfindung liegt die Aufgabe zugrunde, eine Platteneinschiebevorrichung gemäss dem Oberbegriff des Anspruches 1 anzugeben, die einen manuellen Eingriff erübrigt und sich ohne eine Hilfsenergie benötigende Verstellvorrichtung für das Abschieben einer gewünschten Anzahl von Werkstückplatten von einem bereitgestellten Plattenstapel in kürzester Zeit einstellen bzw. umrüsten lässt.

Diese Aufgabe wird erfindungsgemäss durch die kennzeichnenden Merkmale des Anspruches 1 gelöst.

Zum Einstellen der erfindungsgemässen Platteneinschiebevorrichtung bewegt sich somit der Abstützarm relativ zum festgelegten Schiebeglied entsprechend einem eingegebenen Stellbefehl selbsttätig in einer seiner möglichen Verstellrichtungen, wobei das Schiebeglied insbesondere in einer unteren Ausgangsstellung im Stillstand verharrt.

Nach Erreichen der Sollposition des Abstützarmes wird dieser mit dem Schiebeglied gekoppelt und letzteres am Einschubwagen zur Durchführung vertikaler Bewegungen freigegeben. Damit kann während der Einschubbewegungen das Schiebeglied durch den Abstützarm bei Auftreten von aus verzogenen oder gewellten Werkstückplatten resultierenden Unebenheiten, über welche das abzuschiebende Gut hinweg zu transportieren ist, in vertikaler Richtung mitgenommen werden. Es ist somit sichergestellt, dass die Vorderkante des unteren Stirnendes des Schiebegliedes die Oberfläche der oberen Werkstückplatte des sich auf dem Hubtisch befindenden Plattenstapels nicht beschädigen kann.

Bei einer Anordnung mehrerer Platteneinschiebevorrichtungen auf dem Einschubwagen ist die Konstruktion vorteilhaft so getroffen, dass zu deren Neueinstellung ihre Abstützarme gleichzeitig verstellt werden.

In der sich anschliessenden Beschreibung eines in der Zeichnung gezeigten bevorzugten Ausführungsbeispieles einer erfindungsgemässen Platteneinschiebevorrichtung sowie in den Unteransprüchen sind weitere Merkmale und Einzelheiten der Erfindung erläutert.

In der Zeichnung zeigen in schematisierter Darstellung:

Fig. 1    eine Seitenansicht einer von insgesamt drei auf einem Einschiebewagen montierten Platteneinschiebevorrichtungen,

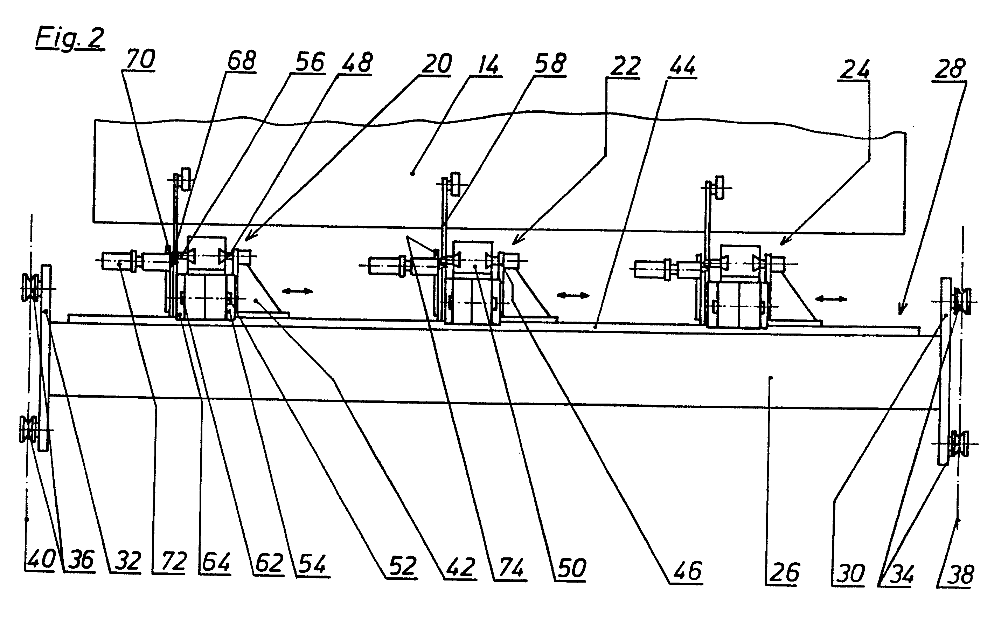

Fig. 2    eine Draufsicht des mit den Platteneinschiebevorrichtungen bestückten Einschiebewagens.

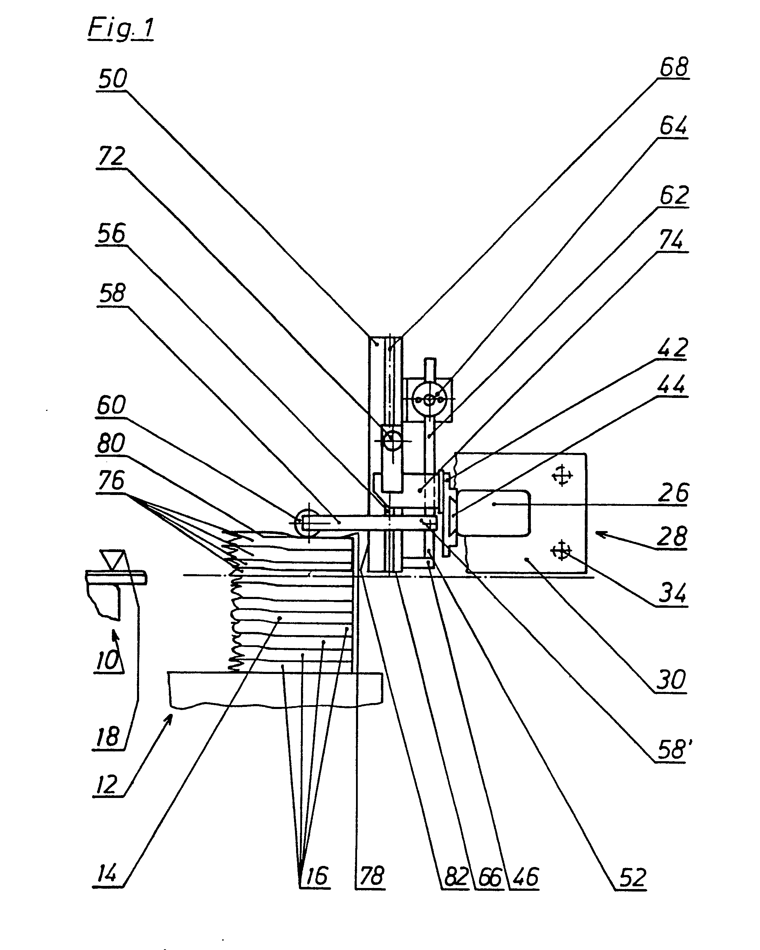

Hinter einer in der Zeichnung nicht dargestellten an sich bekannten Plattenaufteilanlage zum Buntaufteilen von tafel- bzw. plattenförmigen Werkstücken, deren Plattenaufnahmetisch in Fig. 1 als Ganzes mit 10 bezeichnet ist, ist ein an sich bekannter Hubtisch 12 aufgestellt, der einen Plattenstapel 14 aufnimmt, von dem entweder jeweils eine oder eine gleiche Anzahl von Werkstückplatten 16 auf den Plattenaufnahmetisch 10 der Plattenaufteilanlage abschiebbar ist.

Die Zuführung einzelner Werkstückplatten oder von Plattenpaketen auf die obere Tischfläche 18 des Plattenaufnahmetisches 10 der Plattenaufteilanlage wird beispielsweise mit Hilfe von drei als Ganzes mit 20, 22 und 24 bezeichneten Platteneinschiebevorrichtungen bewerkstelligt, die in seitlichem Abstand nebeneinander auf einer Quertraverse 26 eines Einschubwagens 28 in horizontaler Richtung verstellbar und feststellbar angeordnet sind. Die Quertraverse 26 ist zwischen zwei Führungsträgern 30, 32 gehalten, die jeweils mittels zwei Paaren von paarweise übereinander angeordneten Führungsrollen 34 bzw. 36 auf jeweils einer lediglich strichpunktiert angedeuteten Führungsschiene 38 bzw. 40 horizontal verfahrbar geführt sind.

Die Platteneinschiebevorrichtungen 20, 22, 24 entsprechen sich in ihrer konstruktiven Ausbildung und sind jeweils mit einer Aufnahmevorrichtung 42 beispielsweise an einem Schwalbenschwanz 44 der Quertraverse 26 verschiebbar und feststellbar gehalten.

Die Platteneinschiebevorrichtungen 20, 22, 24 weisen jeweils folgenden Aufbau auf:

Von der Aufnahmevorrichtung 42 erstreckt sich in Richtung Plattenstapel 14 ein Träger 46, an dessen freiem Ende eine erste, sich von diesem nach oben erstreckende, vertikale Führungsleiste 48 befestigt ist. Entlang dieser Führungsleiste 48 ist ein vorzugsweise balkenförmig ausgebildetes Schiebeglied 50 sowohl vertikal verschiebbar als auch relativ zu dieser feststellbar geführt. Zu diesem Zweck dient eine sich vom Träger 46 vertikal nach oben wegerstreckende Klemmleiste 52, von der aus Fig. 1 lediglich das untere mit dem Träger 46 verbundene Endstück ersichtlich ist. Dieser Klemmleiste 52 ist ein an der Aufnahmevorrichtung 42 stationär angeordneter Klemmzylinder 54 zugeordnet, mit dessen Hilfe die Klemmleiste 52 an der Aufnahmevorrichtung 42 festlegbar und damit das Schiebeglied 50 relativ zur ersten Führungsleiste 48 feststellbar ist.

Am Schiebeglied 50 ist eine zweite, sich vertikal erstreckende Führungsleiste 56 verschiebbar geführt, an deren unterem Ende ein Abstützarm 58 starr befestigt ist, der sich in Abschieberichtung über das Schiebeglied 50 hinauserstreckt und oberhalb des Hubtisches 12 endet. Dieser Abstützarm 58 trägt an seinem Vorderende eine Tastrolle 60, während sich dessen hinteres Endstück über das Schiebeglied 50 in Richtung Aufnahmevorrichtung 42 erstreckt. Dieses gemäss Fig. 1 frei nach hinten ragende Armendstück 58 trägt eine zweite, sich nach oben erstreckende vertikale Klemmleiste 62, die mittels eines an der Rückseite des Schiebegliedes 50 angeordneten Klemmzylinders 64 am Schiebeglied 50 feststellbar ist.

Die zweite am Schiebeglied 50 geführte Führungsleiste 56 bildet vorteilhaft zugleich einen Bestandteil einer Einrichtung zum Vorwählen der Höhenlage des Abstützarmes 58, bezogen auf die untere Stirnfläche 66 des Schiebegliedes 50, indem sie beispielsweise ein stangenförmiges Informationsglied 68 trägt, das sich entlang der Führungsleiste 56 erstreckt. Diesem Informationsglied 68 ist ein Abtastglied 70 zugeordnet, mit dessen Hilfe die vom Abstützarm 58 relativ zum Schiebeglied 50 zurückgelegte Wegstrecke festgestellt und ein Steuersignal zur Stillsetzung des Abstützarmes 58 in einer vorgewählten Höhenlage ausgelöst werden kann.

Beim vorliegenden Ausführungsbeispiel bildet das Abtastglied 70 bevorzugt eine an sich bekannte kegelstumpfförmige Rolle einer inkrementalen Drehgebereinrichtung 72, die an einem weiteren Träger 74 der Aufnahmevorrichtung 42 stationär angeordnet ist.

Die das Abtastglied 70 bildende Rolle ist derart an das stangenförmige Informationsglied 68 angepresst, dass bei dessen vertikaler Bewegung eine zuverlässige Verdrehung der Drehgebereinrichtung 72 gewährleistet ist. Die erläuterte Einrichtung zum Vorwählen der Höhenlage des Abstützarmes 58 könnte in bekannter Weise auch berührungslos arbeiten, indem als Informationsglied 68 beispielsweise ein binär kodierter Maßstab vorgesehen sein könnte, der auf fotoelektrischem Wege abgetastet wird. Diese Einrichtung kann also jeden möglichen bekannten Aufbau haben, um elektronisch gesteuert den Abstützarm 58 in einer gewünschten Höhenlage zu positionieren.

Die Platteneinschiebevorrichtungen 20, 22, 24 arbeiten in Verbindung mit dem Einschubwagen 28 und dem Hubtisch 12 folgendermassen:

Es sei angenommen, dass von dem auf dem Hubtisch 12 bereitgestellten Plattenstapel 14 ein jeweils drei Werkstückplatten 16 umfassendes Plattenpaket 76 auf den Plattenaufnahmetisch 10 der Plattenaufteilanlage aufgeschoben werden soll.

Wie Fig. 1 zeigt, ist demgemäss der Abstützarm 58 relativ zur unteren Stirnfläche 66 des Schubgliedes 50 in Bezug auf die Pakethöhe so einzustellen, dass in dessen unterer Ausgangslage beim Hochfahren des Hubtisches 12 die Tastrolle 60 des Abstützarmes 58 auf die obere Fläche 78 der obersten Stapelplatte auftrifft. In diesem Falle ist gewährleistet, dass bei der Transportbewegung des Einschubwagens 28 in Richtung Plattenaufteilanlage vom Schiebeglied 50 insgesamt drei Werkstückplatten erfasst und vom Plattenstapel 14 herunter- und auf den Plattenaufnahmetisch 10 der Plattenaufteilanlage aufgeschoben werden. Die Einstellung der hierfür notwendigen bzw. einer entsprechend der gewünschten Anzahl abzuschiebender Werkstückplatten erforderlichen Höhenlage des Abstützarmes 58 ist vollautomatisch zu bewerkstelligen, indem nach Eingabe der gewünschten Höhenlage des Abstützarmes 58 in eine Steuereinrichtung beim Starten des Gesamtanlage zunächst das Schiebeglied 50 über die Klemmleiste 52 und den Klemmzylinder 54, insbesondere in seiner unteren Ausgangsstellung, relativ zur Aufnahmevorrichtung 42 festgelegt und die Klemmleiste 62 des Abstützarmes 58 durch den Klemmzylinder 64 freigegeben wird, so dass sich der Abstützarm 58 zusammen mit der Führungsleiste 56 relativ zum Schubglied 50 verschieben kann. Dabei ist zu beachten, dass sich der Abstützarm 58 selbsttätig in seine untere Ausgangsstellung einstellt, in welcher dessen untere Längskante sich ungefähr in der Ebene der unteren Stirnfläche 66 des Schiebegliedes 50 befinden wird.

Wird nach dem Starten der beschriebenen Anlage der Plattenstapel 14 durch den Hubtisch 12 vertikal angehoben, so kommt die obere Werkstückplatte im Verlauf dieser Hubbewegung mit der Tastrolle 60 in Berührung, wodurch der Abstützarm 58 so lange nach oben relativ zum feststehenden Schiebeglied 50 mitgeschleppt wird, bis die vorgewählte Höhenposition des Abstützgliedes 58 erreicht ist, die durch das Zusammenwirken von Informationsglied 68 und Abtastglied 70 der Drehgebereinrichtung 72 ermittelt wird. Ist diese Stellung erreicht, wird der Hubtisch stillgesetzt, die am Abstützarm 58 befestigte Klemmleiste 62 durch den Klemmzylinder 64 mit dem Schiebeglied 50 gekoppelt, so dass der Abstützarm 58 relativ zum letzteren nunmehr unbeweglich ist, und die Klemmleiste 52 wird durch den Klemmzylinder 54 freigegeben, so dass, nachdem Abstützarm 58 und Schiebeglied 50 miteinander gekoppelt sind, das letztere entlang der vertikalen Führungsleiste 48 verschiebbar ist.

Das Schiebeglied 50 wird nun allein über den Abstützarm 58 gehalten bzw. auf dem Plattenstapel 14 abgestützt.

Wie aus Fig. 1 zu ersehen ist, sind die einzelnen übereinanderliegenden Werkstückplatten 16 uneben, indem sie beispielsweise bei 80 eine Erhöhung aufweisen. Eine solche bzw. mehrerer solcher Unebenheiten einer Werkstückplatte übertragen sich auf die auf ihr aufruhenden Werkstückplatten, insbesondere, wenn diese relativ dünnwandig ausgebildet sind. Im Verlauf der Abschiebebewegung wird demgemäss die vordere untere Kante 82 des Schiebegliedes 50 die Stelle einer solchen Erhöhung 80 passieren, wobei sich die Tastrolle 60 des Abstützarmes 58 in diesem Bereich während der Vorschubbewegung des Einschubwagens 28 entsprechend nach oben verlagern wird. Aufgrund der Kopplung von Abstützarm 58 und Schiebeglied 50 wird diese Vertikalbewegung der Tastrolle 60 über den Abstützarm 58 und die Klemmleiste 62 auch auf das Schiebeglied 50 übertragen, wodurch sichergestellt ist, dass die vordere untere Kante 82 des Schiebegliedes 50 im Bereich der Erhöhung 80 nicht in die obere Fläche der auf dem Plattenstapel 14 oben verbleibenden Werkstückplatte eindringen und diese beschädigen kann.

Wenn also die für das Abschieben einer oder einer gewünschten Anzahl von Werkstückplatten vom Plattenstapel 14 erforderliche Höhenlage des Abstützarmes 58 in die elektronische Maschinensteuerung eingegeben ist, stellen sich an sämtlichen Platteneinschiebevorrichtungen 20, 22, 24 die Abstützarme 58 selbsttätig relativ zum Schiebeglied 50 in die gewünschte Position in der Höhe ein, ohne dass hierzu irgendwelche manuellen Arbeiten an diesen Vorrichtungen vorzunehmen sind.

**Patentansprüche**

1. Auf einem horizontal verfahrbaren Einschubwagen angeordnete Platteneinschiebevorrichtung zum Einschieben von auf einem Hubtisch angelegten plattenförmigen Werkstücken in Plattenaufteilanlagen, mit einem am Einschubwagen höhenverstellbar angeordneten und während dessen Einschiebebewegung mit seinem unteren Endstück an eine Kante eines Werkstückes oder Werkstückpaketes anlegbaren Schiebeglied und mit einem sich in Vorschubrichtung über das Schiebeglied hinauserstreckenden, an diesem höhenverstellbar und feststellbar angeordneten sowie auf das abzuschiebende Werkstück bzw. Werkstückpaket aufsetzbaren Abstützarm,
dadurch gekennzeichnet
dass bei in einer unteren Ausgangsstellung am Einschubwagen (28) festgelegtem Schiebeglied (50) der Abstützarm (58) durch den Hubtisch (12) in eine vorwählbare Höhenstellung mitschleppbar ist und dass nach Erreichen der Höhenstellung der Abstützarm (58) am Schiebeglied (50) selbsttätig festlegbar und danach das Schiebeglied (50) relativ zum Einschubwagen (28) vertikal beweglich ist.

2. Platteneinschiebevorrichtung nach Anspruch 1, dadurch gekennzeichnet, dass das Schiebeglied (50) an einer Aufnahmevorrichtung (42) vertikal beweglich angeordnet ist, die am Einschubwagen (28) quer zu dessen Vorschubrichtungen parallel zur Hubtischfläche verstellbar und feststellbar angeordnet ist.

3. Platteneinschiebevorrichtung nach Anspruch 2, dadurch gekennzeichnet, dass das Schiebeglied (50) an einer vertikalen Führungsleiste (48) der Aufnahmevorrichtung (42) geführt ist und dass letztere eine Klemmvorrichtung (54) trägt, mit deren Hilfe das Schiebeglied (50) an der Führungsleiste (48) festlegbar ist.

4. Platteneinschiebevorrichtung nach einem der vorhergehenden Ansprüche, dadurch gekennzeichnet, dass der Abstützarm (58) an einer am Schiebeglied (50) vertikal verstellbaren Führungsleiste (56) gehalten ist und eine sich zu dieser parallel erstreckende Klemmleiste (62) trägt, die mittels einer am Schiebeglied (50) angeordneten Klemmvorrichtung (64) bei Erreichen einer vorwählbaren Höhenlage des Abstützarmes (58) relativ zum Schiebeglied (50) feststellbar ist.

5. Platteneinschiebevorrichtung nach Anspruch 4, dadurch gekennzeichnet, dass die den Abstützarm (58) tragende Führungsleiste (56) Bestandteil einer Einrichtung zum Vorwählen der Höhenlage des Abstützarmes (58) ist.

6. Platteneinschiebevorrichtung nach Anspruch 5, dadurch gekennzeichnet, dass die den Abstützarm (58) tragende Führungsleiste (56) ein sich zu dieser parallel erstreckendes Informationsglied (68) und die Aufnahmevorrichtung (42) ein mit diesem zusammenwirkendes Abtastglied (70) der Vorwähleinrichtung trägt.

## Claims

1. Device for feeding plate-shaped workpieces placed on an elevating table to a plate-separating installation, said device being arranged on a horizontally displaceable feed carriage, with a feed member arranged in a vertically displaceable manner on said feed carriage, said feed member being able to be made to abut with its lower end piece on an edge of a workpiece or set of workpieces during the feed motion of said feed carriage, and with a support arm extending in the feed direction beyond said feed member, said support arm being arranged in a vertically displaceable and immobilizable manner on said feed member and being positionable on said workpiece or said set of workpieces to be shifted, characterized in that said support arm (58) can be pulled along by said elevating table (12) into a preselectable vertical position when said feed member (50) is fixed in a bottom initial position on said feed carriage (28), and in that after said vertical position has been reached, said support arm (58) is automatically fixable on said feed member (50) which is then vertically movable relative to said feed carriage (28).

2. Device for feeding plates according to Claim 1, characterized in that said feed member (50) is arranged for vertical displacement on a receiving device (42) which is arranged on said feed carriage (28) for adjustment and immobilization transversely to the feed directions of said feed carriage and parallel to the surface of said elevating table.

3. Device for feeding plates according to Claim 2, characterized in that said feed member (50) is guided on a vertical guide bar (48) of said receiving device (42), and in that the latter carries a clamping device (54) by means of which said feed member (50) is fixable on said guide bar (48).

4. Device for feeding plates according to one of the preceding Claims, characterized in that said support arm (58) is held on a guide bar (56) which is vertically adjustable on said feed member (50) and said support arm (58) carries a clamping bar (62) which extends parallel to said guide bar and is immobilizable relative to said feed member (50) by means of a clamping device (64) arranged on said feed member (50) when said support arm (58) has reached a preselectable vertical position.

5. Device for feeding plates according to Claim 4, characterized in that said guide bar (56) carrying said support arm (58) is a component of a mechanism for preselecting said vertical position of said support arm (58).

6. Device for feeding plates according to Claim 5, characterized in that said guide bar (56) carrying said support arm (58) carries an information member (68) extending parallel to said guide bar, and said receiving device (42) carries a sensing member (70) of said preselecting mechanism which cooperates with said information member.

## Revendications

1. Dispositif d'introduction de pièces en forme de plaques déposées sur une table élévatrice dans une installation de séparation de plaques, placé sur un chariot d'enfournement déplaçable horizontalement, et comportant un organe coulissant, qui est placé sur le chariot d'introduction avec possibilité de réglage en hauteur, et qui, pendant son mouvement en vue de l'introduction, peut se placer, avec son extrémité inférieure, contre l'arête d'une pièce ou d'une pile de pièces, et comportant un bras d'appui s'étendant, en direction de l'avancement, vers l'extérieur au dessus de l'organe coulissant, avec possibilité de réglage en hauteur sur ce dernier et avec possibilité d'être immobilisé, et pouvant se positionner sur la pièce ou la pile de pièces à introduire,
caractérisé en ce que,
l'organe coulissant (50) étant fixé sur le chariot d'introduction (28) en position inférieure de sortie, le bras d'appui (58) peut être entraîné avec lui au moyen de la table élévatrice (12) dans une position en hauteur pré-selectionnable, et en ce que, lorsqu'a été atteinte la position en hauteur, le bras d'appui (58) peut être immobilisé de lui-même sur l'organe coulissant (50) et, ensuite, l'organe coulissant (50) peut se déplacer verticalement par rapport au chariot d'introduction (28).

2. Dispositif d'introduction de plaques suivant la revendication 1, caractérisé en ce que l'organe coulissant (50) est disposé mobile verticalement sur un dispositif porteur (42) qui est lui-même disposé sur le chariot d'introduction (28) perpendiculairement à sa direction de déplacement, avec possibilite de réglage parallèlement à la surface de la table élévatrice et avec possibilité d'être immobilisé.

3. Dispositif d'introduction de plaques suivant la revendication 2, caractérisé en ce que l'organe coulissant (50) est guidé sur une barre de guidage (48) verticale du dispositif porteur (42) et en ce que cette dernière porte un dispositif de blocage (54), a l'aide duquel on peut immobiliser l'organe coulissant (50) sur la barre de guidage (48).

4. Dispositif d'introduction de plaques suivant l'une quelconque des revendications précédentes, caractérisé en ce que le bras support (58) est fixé à une barre de guidage (56) réglable verticalement sur l'organe coulissant (50) et porte une barre de blocage (62), disposée parallèlement à celle-ci, qui peut être immobilisée par rapport à l'organe coulissant (50), au moyen d'un dispositif de blocage (64) placé sur l'organe coulissant (50), quand la position en hauteur présélectionnable du bras support (58) par rapport à l'organe coulissant (50) à été atteinte.

5. Dispositif d'introduction de plaques suivant la revendication 4, caractérisé en ce que la barre de guidage (56) portant le bras d'appui (58) est un composant d'une installation pour présélectionner la position en hauteur du bras d'appui (58).

6. Dispositif d'introduction de plaques suivant la revendication 5, caractérisé en ce que la barre de guidage (56) portant le bras d'appui (58) porte un organe d'information (68) disposé parallèlement à celle-ci et que le dispositif porteur (42) porte un organe palpeur (70), agissant simultanément avec cet organe d'information, du dispositif de présélection.

Fig. 1

Fig. 2